# EUROPÄISCHE PATENTSCHRIFT

(11) **EP 1 517 852 B1**
(45) Veröffentlichungstag und Bekanntmachung des Hinweises auf die Patenterteilung: **19.09.2007**
(21) Anmeldenummer: 03740170.0
(22) Anmeldetag: 02.06.2003
(51) Int. Cl.: C01B 13/02, C01B 31/20, B01D 53/22

(54) **MEMBRANTRENNVERFAHREN ZUR ANREICHERUNG VON SAUERSTOFF IN EINEM GASSTROM**
MEMBRANE SEPARATING METHOD FOR ENRICHING OXYGEN IN A GAS FLOW
PROCEDE DE SEPARATION PAR MEMBRANE POUR ENRICHIR UN FLUX DE GAZ EN OXYGÉNE

(30) Priorität: 28.06.2002 DE 10229232
(43) Veröffentlichungstag der Anmeldung: 30.03.2005
(73) Patentinhaber: Fraunhofer-Gesellschaft zur Förderung der angewandten Forschung e.V., 80686 München (DE)
(72) Erfinder: BACKHAUS, Clemens, 46529 Alpen (DE); WERNEKE, Hubert, 44287 Dortmund (DE)
(86) Internationale Anmeldenummer: PCT/EP2003/005739
(87) Internationale Veröffentlichungsnummer: WO 2004/002884

(56) Entgegenhaltungen:
- EP-A- 0 362 436
- EP-A- 0 821 993
- WO-A-99/38602
- US-A- 3 976 451
- US-A- 5 500 036
- US-A- 5 837 032
- US-A- 5 893 275
- "CHEMICAL ABSTRACTS + INDEXES, AMERICAN CHEMICAL SOCIETY. COLUMBUS, US" CHEMICAL ABSTRACTS + INDEXES, AMERICAN CHEMICAL SOCIETY. COLUMBUS, US, XP000192761 ISSN: 0009-2258
- "CHEMICAL ABSTRACTS + INDEXES, AMERICAN CHEMICAL SOCIETY. COLUMBUS, US" CHEMICAL ABSTRACTS + INDEXES, AMERICAN CHEMICAL SOCIETY. COLUMBUS, US, XP000284706 ISSN: 0009-2258
- PATENT ABSTRACTS OF JAPAN vol. 016, no. 029 (C-0904), 24. Januar 1992 (1992-01-24) & JP 03 242304 A (DAIKIN IND LTD), 29. Oktober 1991 (1991-10-29)

## Beschreibung

Die Erfindung betrifft ein Membrantrennverfahren nach dem Oberbegriff von Anspruch 1.

Aus der WO 99/38602 A ist eine Vorrichtung zur Sauerstoffanreicherung von Luft bekannt, bei der über eine Pumpe Luft einer Membrantrennvorrichtung zugeführt wird, wobei an der Membran die Auftrennung der Luft durch Gaspermeation in ein auf einer Retentatseite der Membran abgeführtes Retentat und in ein auf einer Permeatseite der Membran abgeführtes Permeat erfolgt, wobei die Luft vor Eintritt in die Membrantrennvorrichtung auf einen Eingangsdruck oberhalb des Umgebungsdruckes verdichtet wird und wobei das Druckniveau auf der Permeatseite gegenüber dem Eingangsdruck des Gasstroms durch ein Absauggebläse abgesenkt wird.

Aus der US 3,976,451 A ist eine Membrantrennvorrichtung zur Anreicherung von Luft mit Sauerstoff bekannt, wobei der Luftstrom auf Umgebungsdruck zugeführt wird. Über eine Vakuumpumpe wird ein permeatseitiger Unterdruck erzeugt, was zur Absaugung der sauerstoffangereicherten Luft führt.

Aufgabe der vorliegenden Erfindung ist es, ein Membrantrennverfahren und eine Trennvorrichtung der eingangs genannten Art zur Verfügung zu stellen, wobei die Gastrennung bzw. die Anreicherung einer Gaskomponente in einem Gasstrom bei geringem Energieaufwand und niedrigen Investitions- und Betriebskosten möglich ist.

Die zuvor angegebene Aufgabe ist bei einem Membrantrennverfahren mit den Merkmalen von Anspruch 1 gelöst.

Der Erfindung liegt der Grundgedanke zugrunde, das Druckniveau auf der Permeatseite der Membran über den beim Durchtritt der abzutrennenden Komponente durch die Membran auftretenden Druckverlust hinaus gegenüber dem Eingangsdruckniveau des anzureichernden Gasstroms bzw. in Bezug zum Ausgangsdruck des Retentatstroms abzusenken. Die Triebkraft, die für den Durchtritt der anzureichernden Gaskomponente durch die Membran in den Permeatstrom erforderlich ist, wird durch die Druckdifferenz zwischen dem Eingangsgasstrom und dem Permeatstrom bzw. durch die Druckdifferenz zwischen dem Retentatstrom und dem Permeatstrom festgelegt. Bei den aus dem Stand der Technik bekannten Membrantrennverfahren wird der Eingangsgasstrom auf ein hohes Druckniveau - üblicherweise 8 bis 20 bar - verdichtet, so daß eine ausreichend hohe Triebkraft sichergestellt wird. Da der Energieaufwand zur Verdichtung eines Gasstroms bzw. der Energieaufwand zur Druckabsenkung in erster Näherung dem Gasvolumenstrom proportional ist, kann durch das erfindungsgemäße Verfahren der Energieaufwand zur Anreicherung einer Gaskomponente in einem Gasstrom gegenüber den bekannten Membrantrennverfahren deutlich gesenkt werden. Durch das erfindungsgemäße Membrantrennverfahren ist es erst möglich, neue Einsatzbereiche und Anwendungen zu erschließen und Membrantrennverfahren für bestimmte Bereiche wirtschaftlich einzusetzen.

Der Gasstrom kann zum einen vor Eintritt in die Membrantrenneinrichtung auf einen Eingangsdruck oberhalb des Umgebungsdruckes verdichtet werden. In diesem Fall muß das Druckniveau auf der Permeatseite gegenüber dem Eingangsdruck des Gasstroms soweit abgesenkt werden, daß ein Durchtritt der anzureichernden Gaskomponente durch die Membran in den Permeatstrom sichergestellt ist. Zum anderen kann das Druckniveau auf der Retentatseite gesenkt werden, wobei der Gasstrom der Membrantrenneinrichtung auf Umgebungsdruck zugeführt wird. In diesem Fall ist es notwendig, daß das Druckniveau auf der Permeatseite gegenüber dem Ausgangsdruck des Retentatstroms soweit abgesenkt wird, daß ein Durchtritt der anzureichernden Komponente durch die Membran in den Permeatstrom erfolgen kann.

Wenngleich das erfindungsgemäße Verfahren zur Sauerstoffanreicherung von Luft eingesetzt werden soll, ist es selbstverständlich auch möglich, andere Gaskomponenten in dem Gasstrom anzureichern. Beispielsweise kann das erfindungsgemäße Verfahren zur Stickstoffanreicherung von Luft eingesetzt werden, wobei der Sauerstoff aus der Luft durch die Membran in den Permeatstrom übergeht und somit eine Anreicherung des Retentatstroms mit Stickstoff erfolgt. Darüber hinaus kann das erfindungsgemäße Verfahren zur Abtrennung von Kohlendioxid sowie zur Auftrennung und/oder zur Anreicherung von Verbrennungsgasen eingesetzt werden. Schließlich ist es auch denkbar, daß das erfindungsgemäße Verfahren nicht nur zur Anreicherung von Gaskomponenten in einem Gasstrom sondern auch zur Anreicherung von Komponenten in beliebigen fluiden Medien eingesetzt wird.

Sauerstoffangereicherte Luft kann in vielfältigen Anwendungen eingesetzt werden. Aufgrund des erfindungsgemäßen Verfahrens ist es möglich, ein wenig energieintensives und damit wirtschaftliches Verfahren zur Sauerstoffanreicherung von Luft zur Verfügung zu stellen. Eine Absenkung des Druckniveaus auf der Permeatseite bewirkt eine Verbesserung des Trennprozesses. Der Sauerstoffgehalt im Permeat erhöht sich aufgrund der Vergrößerung der transmembranen Druckdifferenz. Gleichzeitig steigt der Volumenstrom des Permeats. Diese beiden Effekte führen zu einer Verbesserung der Trennleistung. Das Verfahren ermöglicht darüber hinaus eine einfache Regelung des Volumenstroms des Permeats und zeichnet sich durch eine einfache und wirtschaftliche Betriebsweise aus.

Die Anreicherung einer gasförmigen Komponente in einem Gasstrom beruht auf dem Mechanismus der Gaspermeation, bei der sowohl der eintretende Gasstrom bzw. der Retentatstrom als auch der Permeatstrom gasförmig vorliegen. Der Vorgang der Gaspermeation ist an sich bekannt und kann durch eine Lösungs-Diffusions-Mechanismus beschrieben werden. Es findet in der Membrantrenneinrichtung an der Membranoberfläche eine Sorption der permeierenden Komponente des Gasstroms, beispielsweise des Sauerstoffs der Luft, statt. Es folgt die Diffusion durch die Membrantrennschicht und anschließend die Desorption auf der Permeatseite der Membran.

Basierend auf dem Mechanismus der Gaspermeation findet eine Trennung des Eingangsgasstroms (Feedstrom) in einen sauerstoffangereicherten Permeatstrom und einen sauerstoffabgereicherten Retentatstrom statt. Mit dem erfindungsgemäßen Verfahren ist es möglich, den Permeatstrom auf eine Sauerstoffkonzentration von 22 bis 45 Vol.-% aufzukonzentrieren, wobei vorzugsweise der Permeatstrom ca. 30 Vol.-% Sauerstoff aufweist. Während bei der Sauerstoffanreicherung von Luft vorgesehen ist, daß der Sauerstoff durch die Membran in den Permeatstrom übergeht, ist es grundsätzlich natürlich auch möglich, daß die anzureichernde Gaskomponente im Retentatstrom vorliegt. In diesem Fall ist es so, daß der Großteil bzw. eine Mehrzahl von Komponenten durch die Membran in den Permeatstrom übergeht, während die anzureichernde Komponente nicht durch die Membran hindurchtritt und dadurch im Retentatstrom angereichert wird.

Erfindungsgemäß wurde weiter festgestellt, daß der Permeatstrom mit einem absoluten Druck zwischen 0,4 bar bis kleiner 1 bar, also mit Unterdruck, abgeführt werden sollte, um einen Durchtritt der anzureichernden Gaskomponente durch die Membran in den Permeatstrom zu gewährleisten und gleichzeitig den Energieaufwand zur Anreicherung der Gaskomponente möglichst gering zu halten. Ein weiteres bevorzugtes Druckniveau des Permeatstroms liegt zwischen 0,5 bar bis 0,65 bar. Der Gasstrom sollte dazu mit einem absoluten Druck zwischen 1,35 bar bis 1,5 bar zugeführt werden, wobei die Druckdifferenz zwischen dem Feedstrom und dem Permeatstrom 0,2 bar bis 0,5 bar vorzugsweise betragen sollte. Der Retentatstrom kann insbesondere mit 1 bar, also etwa mit Umgebungsdruck, abgeführt werden. Dabei versteht es sich, daß alle Werte aus dem vorgenannten Wertebereichen erfindungsgemäß erfaßt sind, wobei bedarfsweise auch einzelnen ausgewählten Werten aus den Wertebereichen besondere Vorteile im Rahmen der Anwendung des erfindungsgemäßen Verfahrens zukommen können.

Um den Energieverbrauch zur Verdichtung des Gasstroms vor Eintritt in die Membrantrenneinrichtung möglichst gering zu halten, ist vorzugsweise vorgesehen, daß die Druckdifferenz zwischen dem Gasstrom und dem Retentatstrom 1 bar, vorzugsweise 0,2 bar bis 0,5 bar, nicht überschreitet. Dabei ist von Bedeutung, daß die Druckdifferenz zwischen dem Gasstrom und dem Retentatstrom zumindest ausreichend groß ist, um die retentatseitig auftretenden Druckverluste zu kompensieren, die beim Durchströmen des Gasstroms durch die Membrantrenneinrichtung auftreten. Wenn die Druckdifferenz zwischen dem Gasstrom und dem Retentatstrom nicht ausreichend groß ist, stellt sich für die angereicherte Komponente im Permeatstrom eine geringere Konzentration ein. Bei einer weiteren vorteilhaften Ausführungsform ist erfindungsgemäß vorgesehen, daß die Druckdifferenz in Abhängigkeit von der Konzentration der anzureichernden Komponente im Permeatstrom eingeregelt wird. Generell gilt, daß die Druckniveaus des Eingangsgasstroms und des Retentats bei entsprechend geforderten Konzentrationen des angereicherten Permeats möglichst gering sein sollten, um den Energieaufwand zu minimieren.
Durch das erfindungsgemäße Verfahren ist es in einfacher Weise möglich, den Volumenstrom des Permeatstroms und/oder die Konzentration der anzureichernden Gaskomponente im Permeatstrom durch die Absenkung des Druckniveaus auf der Permeatseite zu regeln. Dadurch wird eine besonders vorteilhafte Möglichkeit zur Verfügung gestellt, den Volumenstrom des Permeatstroms bzw. die Konzentration der angereicherten Gaskomponente exakt und reproduzierbar bei geringem Energieaufwand auf die besonderen Bedürfnisse des Anwenders einzustellen.

Weiterhin ist von Bedeutung, daß das Druckniveau auf der Permeatseite so stark gesenkt werden muß, daß die resultierende Triebkraft ausreicht, um eine Anreicherung der Gaskomponente in dem Permeatstrom zu bewirken. Selbstverständlich ist es erfindungsgemäß auch vorstellbar, daß zusätzlich zur Absenkung des Druckniveaus auf der Permeatseite das Druckniveau des eintretenden Gasstroms erhöht wird und somit die Triebkraft weiter vergrößert wird.

Eine vorteilhafte Ausführungsform des erfindungsgemäßen Verfahrens sieht vor, daß das Verfahren einstufig ausgeführt wird. "Einstufig" bezieht sich in diesem Zusammenhang auf die Druckerhöhung des Eingangsgasstroms und/oder die erfindungsgemäß vorgesehene Druckabsenkung des Permeats. Das einstufige Verfahren zeichnet sich durch seinen einfachen Aufbau aus und ermöglicht eine übersichtliche Prozeßführung. Insbesondere bei technischen Anwendungen, bei denen es ausreichend ist, einen in Bezug auf die Gaskomponente nur mäßig angereicherten Permeatstrom zur Verfügung zu stellen, bietet sich die einstufige Ausführung des Verfahrens an. Dies gilt beispielsweise für die Sauerstoffanreicherung von Luft. Die einstufige Ausführung des Verfahrens führt zu geringeren Betriebs- und Investitionskosten und ist daher besonders wirtschaftlich einzusetzen.

Um unterschiedliche Volumenströme zu erhalten, ist es erfindungsgemäß vorgesehen, daß der Gasstrom in wenigstens zwei Teilströme aufgeteilt und durch eine Mehrzahl von parallel angeordneten Membrantrenneinheiten und/oder Membrantrenneinrichtungen aufgetrennt wird. Selbstverständlich ist es auch möglich, daß mehrere, in eine Membrantrenneinrichtung eingesetzte Module, parallel betrieben werden. Grundsätzlich ist jedoch auch eine Reihenschaltung mehrerer Membrantrenneinheiten möglich.

Erfindungsgemäß ist vorgesehen, daß als Membrantrenneinheiten z. B. Plattenmodule, Taschenmodule oder Hohlfasermodule eingesetzt werden können. Selbstverständlich ist es auch möglich, daß eine Mehrzahl unterschiedlicher Trenneinheiten kombiniert werden, um optimale Trennergebnisse zu erzielen. Die Stoffeigenschaften der eingesetzten Membranen, wie z. B. Trennschichtdikke der Membranen, Permeabilität, Selektivität und Temperaturbeständigkeit, beeinflussen die Leistung der Membrantrenneinrichtung. Grundsätzlich können jedoch alle Membrantypen für das erfindungsgemäße Verfahren in Abhängigkeit von dem jeweiligen Anwendungsfall konfektioniert und eingesetzt werden. Die Haltbarkeit der Membrantrenneinrichtung ist nicht beschränkt, da keine mechanische Belastung durch bewegliche Teile verursacht wird. Das Verfahren ist daher sehr wartungsarm. Alterungseinflüsse der Membrantypen sind bei geeigneter Auswahl der Membrantypen in Abhängigkeit von dem Anwendungsverfahren nur von untergeordneter Bedeutung.

Um eine Schädigung der Membrantrenneinrichtung bzw. der Membran und/oder der vor- oder nachgeschalteten Verdichtung bzw. Absaugung der gasförmigen Medien zu verhindern, ist erfindungsgemäß vorgesehen, daß aus dem Gasstrom vor dem Eintritt in die Membrantrenneinrichtung, vorzugsweise vor der Verdichtung, eine Abscheidung von Störkomponenten, insbesondere von Partikeln und/oder Ölen und/oder Fetten, vorgesehen wird. Das Eindringen solcher Störkomponenten in die Anlagenkomponenten ist möglichst zu vermeiden, da die Störkomponenten die Trennung bzw. Anreicherung der Gaskomponente negativ beeinflussen können. Insbesondere ist hier eine Schädigung der in der Membrantrenneinrichtung eingesetzten Membran zu befürchten. Grundsätzlich sollte der Aufwand zur Grasreinigung jedoch weitgehend minimiert werden, um die Kosten gering zu halten.

Der Gasstrom kann vor dem Eintritt in die Membrantrenneinrichtung, vorzugsweise nach der Verdichtung, gekühlt oder erwärmt werden. Dadurch wird sichergestellt, daß die maximal zulässigen Grenztemperaturen des jeweiligen Membrantyps nicht überschritten werden. Bei Erwärmung des Gasstroms kann das Auskondensieren von mit dem Gasstrom mitgeführten kondensierbaren Gasbestandteilen, beispielsweise Wasserdampf, verhindert werden. Hierbei wird der Gasstrom vorzugsweise von 35°C bis 50°C, vorzugsweise 45°C, auf 50°C bis 75°C, vorzugsweise 60°C bis 65°C, erwärmt. Eine Abkühlung des Gasstroms ist auf ein Temperaturniveau von 0°C bis 30°C, insbesondere von 0°C bis 20°C, vorzugsweise vorgesehen. Die Erwärmung bzw. Abkühlung des Gasstroms kann in Abhängigkeit von der eingesetzten Membran und der Temperaturabhängigkeit der spezifischen Parameter erfolgen, die den Trennprozeß durch die Membran bestimmen. Wird das erfindungsgemäße Verfahren zur Sauerstoffanreicherung von Luft eingesetzt, kann die Luft somit unmittelbar aus der Umgebung der Membrantrenneinrichtung zugeführt werden und das Verfahren bei Umgebungstemperatur stattfinden.

Das Erneuerbare-Energien-Gesetz (EEG) garantiert feste Vergütungssätze für Strom aus Deponiegasen. Die Anlagentechnik ist zwar auf den Deponien vorhanden, kann aufgrund der Gasqualitäten jedoch oft nicht mehr genutzt werden.
Eine besonders bevorzugte Verwendung des eingangs genannten Verfahrens zur Sauerstoffanreicherung von Luft sieht vor, den sauerstoffangereicherten Permeatstoff zur gasmotorischen Verbrennung von Deponiegasen einzusetzen, Im Zuge der TA Siedlungsabfall haben sich auf Deponien die Gasqualitäten und - raten deutlich verändert. Die diffuse Entgasung von Methan im Deponiebereich wird durch gezielte Vorkehrungen der Deponietechnik, Gasdrainagen und Sammelleitungen, reduziert. Die Gasqualität ist Schwankungen unterworfen und kann in Gasmotoren derzeit nur bei mindestens 40 % Methananteil im Deponiegas technisch in Blocklaeizkraftwerken genutzt werden. Alternativ wird das Methan abgefackelt oder diffuse Entgasungen treten verstärkt auf und belasten die Umwelt. Das Methan trägt 23 mal stärker zum Treibhauseffekt bei als Kohlendioxid und geht ungenutzt als Energieträger verloren.

Mit Hilfe des einstufigen Verfahrens zur Sauerstoffanreicherung von Luft ist es möglich, Anlagemodule zu erstellen, mit denen man Verbrennungsluft mit einem erhöhten Sauerstoffanteil erzeugen kann. Aufgrund der wirtschaftlichen günstigen Rahmenbedingungen des Verfahrens kann diese Verbrennungsluft mit einem erhöhten Sauerstoffanteil dann auch mit niedrigeren Gasqualitäten (< 40 % Methan) zusammen in den Blockheizkraftwerken technisch genutzt werden. Es verschieben sich die Massenanteile der Inertgasmengen und man erhält zündfähige Brennstoff-Luft-Gemische, die einen sicheren Motorenbetrieb gewährleisten. Weitere Vorteile bestehen in der Emissionsverminderung, der Wirkungsgradverbesserung und der Brennstoffeffizienz. Neben dem wirtschaftlichen Aspekt wird somit ein entscheidender Beitrag zur Umweltentlastung ermöglicht.

Die vorgenannten Vorteile ergeben sich auch bei Verwendung des erfindungsgemäß beschriebenen Verfahrens zur gasmotorischen Verbrennung von Holzgasen oder Sondergasen wie Klär- oder Biogasen, ohne daß im einzelnen auf diese spezielle Verwendung eingegangen wird. Weitere Einsatzgebiete bestehen in der Mikroturbinentechnik und Brennstoffzellentechnik. So können bei Verwendung des erfindungsgemäß beschriebenen Verfahrens mit der angereicherten Luft Wirkungsgradverbesserungen erzielt werden.

Darüber hinaus ist es bei einer anderen bevorzugten Ausgestaltung möglich, das erfindungsgemäße Verfahren zur Bereitstellung sauerstoffangereicherter Luft in einer Sporteinrichtung, insbesondere in einem Wellnesscenter o. dgl., einzusetzen. Um der erhöhten Sauerstoffaufnahme während einer sportlichen Betätigung Rechnung zu tragen oder um das Wohlbefinden und die Leistungsfähigkeit des Sportlers zu steigern (Höhentraining), ist es bekannt, in Sporteinrichtungen oder Wellnesscentern die Umgebungsluft mit Sauerstoff anzureichern oder die Luft mit Sauerstoff abzureichern. Der Sauerstoff zur Sauerstoffanreicherung stammt dabei üblicherweise aus Druckgasflaschen und ist dementsprechend kostenintensiv. Das erfindungsgemäße Verfahren bietet für diesen speziellen Verwendungsfall Vorteile aufgrund des geringen Energieverbrauchs und der deutlich geringeren Kosten, die durch die Sauerstoffanreicherung bzw. -abreicherung der in der Sporteinrichtung befindlichen Luft verursacht werden. Darüber hinaus ist auch die Verwendung des erfindungsgemäßen Verfahrens in Verbindung mit der Raumklimatisierung möglich.

Weitere bevorzugte Anwendungsbereiche des erfindungsgemäßen Verfahrens sind die Sauerstoffanreicherung von Abwässern in Belebungsbecken einer Kläranlage oder dergleichen, wobei vor allem schwankende oder zu geringe Sauerstoffkonzentrationen ausgeglichen werden können. Schließlich ist auch die Verwendung von sauerstoffangereichertem Gas in chemischen Prozessen durch Einsatz des erfindungsgemäßen Verfahrens bei deutlich geringeren Kosten möglich, beispielsweise im Hochofenbereich.

Die Erfindung wird nachstehend ohne Beschränkung des allgemeinen Erfindungsgedankens anhand eines Ausführungsbeispiels und unter Bezugnahme auf die Zeichnung exemplarisch beschrieben. Es zeigen
- Fig. 1: ein Verfahrensfließbild zur Sauerstoffanreicherung von Luft unter Verwendung einer Membrantrenneinheit und
- Fig. 2: den Verlauf der Sauerstoffkonzentration im Permeatstrom in Abhängigkeit von dem zur Anreicherung des Permeatstroms benötigten Energiebedarfs und des Volumenstroms des Permeats.

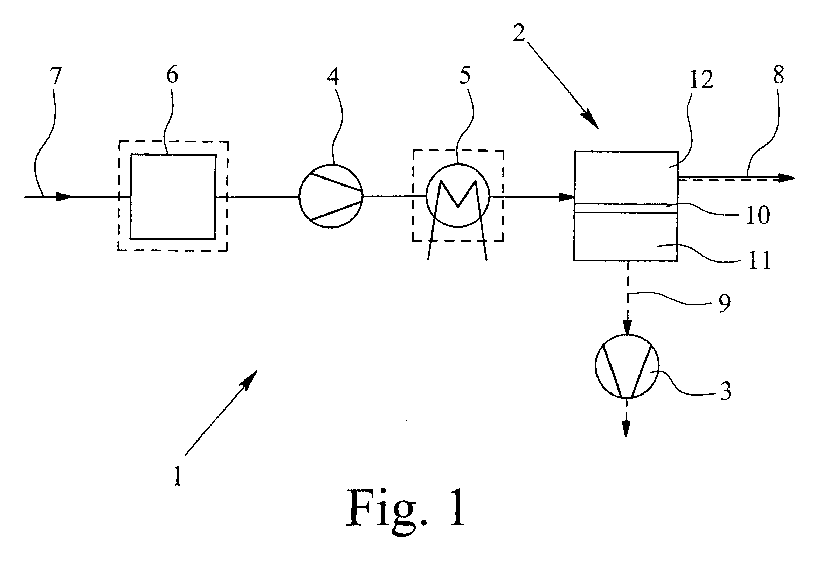

In der Fig. 1 ist ein einstufiges Verfahrens zur Sauerstoffanreicherung von Luft unter Verwendung einer Membrantrennvorrichtung 1 dargestellt. Die Membrantrennvorrichtung 1 weist gemäß der Fig. 1 eine Membrantrenneinrichtung 2, eine der Membrantrenneinrichtung 2 nachgeschaltete Absaugeinrichtung 3, bei der es sich beispielsweise um einen Verdichter handelt, einen weiteren Verdichter 4 sowie optional einen Wärmetauscher 5 und einen Filter 6, die jeweils der Membrantrenneinrichtung 2 vorgeschaltet sind, auf.

Die anzureichernde Umgebungsluft 7 wird aus der Umgebung angesaugt und zur Abscheidung von Staubpartikeln oder groben Verschmutzungen dem Filter 6 zugeführt. Anschließend erfolgt im Verdichter 4 die Verdichtung der Luft 7 insbesondere auf ein Druckniveau von etwa 1,5 bar absolut.

Es besteht die Option, die Luft 7 nach der Verdichtung durch den Wärmetauscher 5 zu erwärmen bzw, zu kühlen. Dadurch wird zum einen sichergestellt, daß die zulässigen Betriebstemperaturen der Membrantrenneinrichtung 2, speziell die Grenztemperatur einer nicht im einzelnen dargestellten Membran einer Membrantrenneinheit 10 eingehalten werden können. Auf der anderen Seite ist es möglich, durch Erwärmen der Luft 7 ein Auskondensieren des mit der Luft 7 zugeführten Wasserdampfes zu vermeiden.

Der Luftstrom 7 wird nach dem Passieren des Wärmetauschers 5 der Membrantrenneinrichtung 2 zugeführt und teilt sich in ein sauerstoffabgereichertes Retentat 8 und ein sauerstoffangereichertes Permeat 9 auf.

Weiter ist nun vorgesehen, daß das Druckniveau auf der Permeatseite 11 der Membrantrenneinrichtung 2 durch die Absaugeinrichtung 3 abgesenkt wird. Das Druckniveau auf der Permeatseite 11 der Membrantrenneinrichtung 2 wird auf 0,4 bis kleiner 1 bar gesenkt, während das Druckniveau auf der Retentatseite 12 der Membrantrenneinrichtung insbesondere 1 bar beträgt.

Die Membrantrenneinrichtung 2 kann aus Membrantrenneinheiten 10 unterschiedlicher Bauart bestehen. Als Membrantrenneinheiten 10 können beispielsweise Plattenmodule, Taschenmodule und/oder auch Hohlfasermodule Verwendung finden. Weitere konstruktive Ausführungen der Membrantrenneinheiten sind potentiell einsetzbar. Die Membrantrenneinheiten können parallel betrieben werden, um unterschiedliche Volumenströme zu erhalten. Wesentlich dabei ist, daß die Membrantrenneinheit 10 wenigstens eine Membran aufweist, die den selektiven Übergang ausgewählter Gaskomponenten in das Permeat 9 ermöglicht.

Ein wesentlicher Vorteil des Verfahrens liegt in der einstufigen Ausführung und damit verbundenen einfachen Prozeßführung. Der zugeführte Volumenstrom der Luft 7 wird in der Membrantrenneinrichtung 2 basierend auf dem Prinzip der Gaspermeation getrennt. Treibende Kraft dieser Trennung ist die Druckdifferenz zwischen der Luft 7 und dem Permeat 9. Die Anreicherung einer Gaskomponente in einem Gasstrom kann in Abhängigkeit von dem jeweiligen Anwendungsfall durch Variation der einzustellenden Volumenströme des Gasstroms, beispielsweise der Luft 7, des Retentats 8 und des Permeats 9 sowie der entsprechenden Druckniveaus gesteuert werden. Dabei ist es so, daß der Druck auf der Permeatseite 11 der Membrantrenneinrichtung 2 insbesondere im Unterdruckbereich eine Verbesserung des Trennprozesses bewirkt. Der Volumenstrom und der Sauerstoffgehalt des Permeats 9 können so variiert werden.

In diesem Zusammenhang ist vorgesehen, daß der Differenzdruck zwischen der in die Membrantrenneinrichtung 2 eintretenden Luft 7 und dem sauerstoffabgereicherten Retentat 8 einen Wert von 0,5 bar nicht überschreitet. Die vorgenannte Druckdifferenz kann dabei im Hinblick auf einen minimalen Energieverbrauch des erfindungsgemäßen Verfahrens bzw. auf eine gewünschte Sauerstoffkonzentration des Permeats 9 eingeregelt werden.

Nicht dargestellt ist im übrigen, daß der Verdichter 4 selbstverständlich auch auf der Retentatseite 12 der Membran in der Art angeordnet sein kann, daß das Retentat 8 angesaugt wird. In diesem Fall ist eine Verdichtung der Luft 7 vor Eintritt in die Membrantrenneinrichtung 2 nicht notwendig. Wesentlich dabei ist, daß in diesem Fall die Triebkraft zur Trennung bzw. Anreicherung des Sauerstoffs im Permeat 9 durch die Druckdifferenz zwischen dem Retentat 8 und dem Permeat 9 bestimmt wird.

Um einen mobilen Einsatz bzw. einen Transport der Trennvorrichtung 1 in einfacher Art und Weise sicherzustellen, ist vorrichtungsgemäß weiterhin vorgesehen, daß insbesondere die Membrantrenneinrichtung 2, die Absaugeinrichtung 3 sowie der Verdichter 4 und/oder die weiteren, zu der Membrantrennvorrichtung 1 gehörenden Bauteile in einem transportablen Gehäuse in der Art eines Containers aufgenommen sind und eine mobile Baueinheit bilden. Dies bietet sich insbesondere deshalb an, da die erfindungsgemäße Trennvorrichtung 1 einen kompakten Aufbau und daraus resultierend geringe Abmessungen und ein geringes Gewicht der Anlagenkomponenten und Regelungseinheiten zuläßt.

In der Membrantrenneinrichtung 2 findet eine Trennung von Luft 7 in einen mit Sauerstoff angereicherten Volumenstrom, das Permeat 9, und in einen mit Sauerstoff abgereicherten Volumenstrom, das Retentat 8, statt. Auf der Permeatseite 11 wird ein Unterdruck von 200 mbar durch die Absaugvorrichtung 3 aufgebracht. Es stellt sich ein Volumenstrom von 3,1 m³/h bei einem Druck von 0,8 bar absolut ein und es wird in diesem Betriebszustand ein Sauerstoffgehalt von 25,46 % gemessen. Auf der Retentatseite 12 ist ein Druckniveau von 1, 15 bar absolut eingestellt. Der Volumenstrom des Retentats 8 mit einem Anteil Sauerstoff von 18,75 % beträgt 4,5 m³/h.

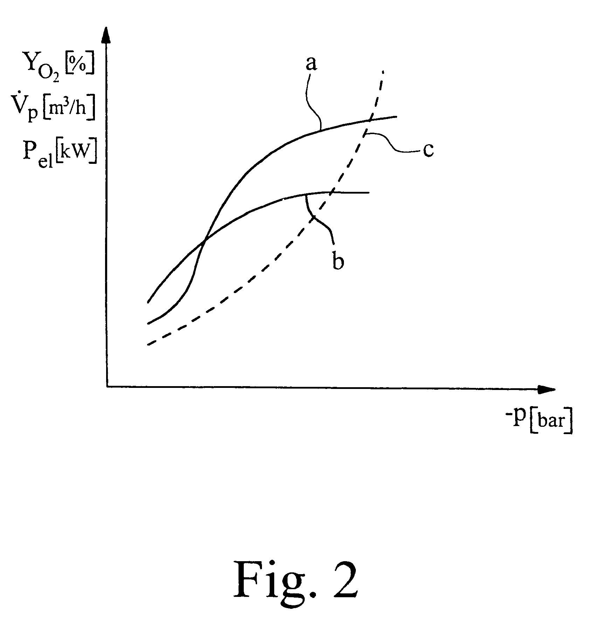

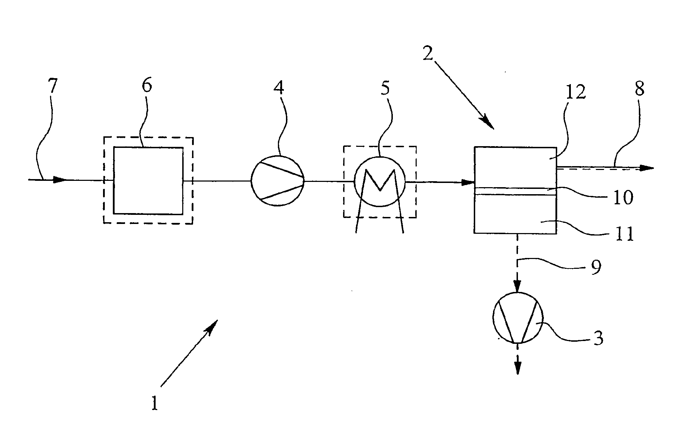

In der Fig. 2 ist schematisch und qualitativ der Verlauf der Sauerstoffkonzentration y_{O2} [%] anhand der Kurve b in Abhängigkeit von der Absenkung des Druckniveaus auf der Permeatseite der Membrantrenneinrichtung dargestellt.

Erfindungsgemäß konnte zunächst festgestellt werden, daß sich in Abhängigkeit der Druckniveaus des Eingangsgasstroms und des Retentats ein Optimum für den angereicherten Volumenstrom auf der Permeatseite einstellt. Es kommt zu einem Anstieg der Sauerstoffkonzentration im Permeat. Ist der Differenzdruck zwischen dem Eingangsgasstrom und dem Retentatstrom zu gering, nimmt die erreichte Sauerstofflconzentration ab.

Des weiteren konnte festgestellt werden, daß die Absenkung des Druckniveaus auf der Permeatseite gegenüber dem Eingangsdruck des Gasstroms in die Membrantrenneinrichtung zu einer Verbesserung und höheren Konzentration der angereicherten Komponente im Permeatstrom führt.

Der Volumenstrom Vp [m³/h] des Permeats zeigt einen degressiv steigenden Verlauf mit sinkendem Druckniveau auf der Permeatseite (Kurve a). Der Energiebedarf Pₑₗ [kW] zur Absenkung des Druckniveaus auf der Permeatseite, der in der Fig. 2 durch die Kurve c dargestellt ist, steigt dagegen progressiv mit zunehmender Druckabsenkung des Permeatstroms an.

Im übrigen wird darauf hingewiesen, daß ein Recyclieren des Permeats 9 und/oder des Retentats 8 vorzugsweise nicht vorgesehen ist, grundsätzlich aber möglich ist. Auch eine Rückkopplung des Permeats 9 mit dem Retentat 8 ist vorzugsweise nicht vorgesehen, grundsätzlich aber möglich. Dies gilt vor allem bei Einsatz des erfindungsgemäßen Verfahrens zur Sauerstoffanreicherung.

## Patentansprüche

1. Membrantrennverfahren zur Sauerstoffanreicherung von Luft (7), wobei Luft zur Anreicherung von Sauerstoff wenigstens einer wenigstens eine Membran aufweisenden Membrantrenneinheit (10) einer Membrantrenneinrichtung (2) zugeführt wird, wobei an der Membran die Auftrennung der Luft durch Gaspermeation in ein auf einer Retentatseite (12) der Membran abgeführtes Retentat (8) und in ein auf einer Permeatseite (11) der Membran abgeführtes Permeat (9) erfolgt, wobei die anzureichernde Gaskomponente durch einen Lösungs-Diffusions-Mechanismus durch die Membran permeiert, wobei die Luft vor Eintritt in die Membrantrenneinrichtung (2) auf einen Eingangsdruck oberhalb des Umgebungsdruckes verdichtet wird und wobei das Druckniveau auf der Permeatseite (11) gegenüber dem Eingangsdruck des Gasstroms abgesenkt wird, wobei das Permeat (9) auf eine Sauerstoffkonzentration von 22 bis 45 Vol.-% angereichert wird, **dadurch gekennzeichnet, daß** der Gasstrom mit einem absoluten Druck von 1,35 bar bis 1,5 bar der Membrantrenneinrichtung (2) zugeführt wird und daß das Permeat (9) mit einem absoluten Druck zwischen 0,4 bar bis kleiner 1,0 bar aus der Membrantrenneinrichtung (2) abgeführt wird.

2. Verfahren nach Anspruch 1, **dadurch gekennzeichnet, daß** die Druckdifferenz zwischen dem Gasstrom und dem Retentat (8) 1 bar, vorzugsweise 0,2 bar bis 0,5 bar, nicht überschreitet und/oder daß die Druckdifferenz in Abhängigkeit von der Konzentration der anzureichernden Komponente im Permeat (9) eingeregelt wird.

3. Verfahren nach einem der vorhergehenden Ansprüche 1 oder 2, **dadurch gekennzeichnet, daß** der Volumenstrom des Permeats (9) und/oder die Konzentration der angereicherten Gaskomponente durch die Absenkung des Druckniveaus auf der Permeatseite (11) geregelt wird.

4. Verfahren nach einem der vorhergehenden Ansprüche, **dadurch gekennzeichnet, daß** das Permeat (9) auf eine Sauerstoffkonzentration von 30 Vol.-% angereichert wird.

5. Verfahren nach einem der vorhergehenden Ansprüche, **dadurch gekennzeichnet, daß** das Verfahren einstufig ausgeführt wird.

6. Verfahren nach einem der vorhergehenden Ansprüche, **dadurch gekennzeichnet, daß** der Gasstrom in wenigstens zwei Teilströme aufgeteilt und durch eine Mehrzahl von parallel angeordneten Membrantrenneinheiten (10) und/oder Membrantrenneinrichtungen (2) einer Membrantrennvorrichtung (1) aufgetrennt wird.

7. Verfahren nach einem der vorhergehenden Ansprüche, **dadurch gekennzeichnet, daß** als Membrantrenneinheit (10) wenigstens ein Taschenmodul und/oder Plattenmodul und/oder Hohlfasermodul eingesetzt wird.

8. Verfahren nach einem der vorhergehenden Ansprüche, **dadurch gekennzeichnet, daß** aus dem Gasstrom vor dem Eintritt in die Membrantrenneinrichtung (2), vorzugsweise vor der Verdichtung, eine Abscheidung von Störkomponenten, insbesondere von Partikeln und/oder Ölen und/oder Fetten, vorgesehen wird.

9. Verfahren nach einem der vorhergehenden Ansprüche, **dadurch gekennzeichnet, daß** der Gasstrom vor dem Eintritt in die Membrantrenneinrichtung (2), vorzugsweise nach der Verdichtung, vorzugsweise um 10°C bis 25°C, erwärmt wird oder gekühlt wird.

10. Verfahren nach einem der vorhergehenden Ansprüche, **dadurch gekennzeichnet, daß** aus dem Gasstrom vor dem Eintritt in die Membrantrenneinrichtung (2) kondensierbare Bestandteile, insbesondere Wasser, abgeschieden werden.

11. Verfahren nach einem der vorhergehenden Ansprüche, **dadurch gekennzeichnet, daß** die Auftrennung des Gasstroms in der Membrantrenneinrichtung (2) bei Umgebungstemperatur erfolgt.

12. Verfahren nach einem der vorhergehenden Ansprüche, **dadurch gekennzeichnet, daß** die Verdichtung des Gasstroms vor Eintritt in die Membrantrenneinrichtung (2) und/oder die Absenkung des Druckniveaus des Retentats (8) und/oder des Permeats (9) einstufig erfolgt und daß, vorzugsweise, die Verdichtung variabel auf ein vorgegebenes Druckniveau einstellbar erfolgt.

## Claims

1. Membrane separating method for oxygen enrichment of air (7), air for enrichment of oxygen being supplied at least to one membrane separating unit (10) of a membrane separating device (2), which unit has at least one membrane, the separation of the air being effected at the membrane by gas permeation into a retentate (8) discharged on a retentate side (12) of the membrane and into a permeate (9) discharged on a permeate side (11) of the membrane, the gas component to be enriched permeating through the membrane by means of a solution-diffusion mechanism, the air being compressed before entry into the membrane separating device (2) to an input pressure above ambient pressure and the pressure level on the permeate side (11) being lowered relative to the input pressure of the gas flow, the permeate (9) being enriched to an oxygen concentration of 22 to 45% by volume, **characterised in that** the gas flow is supplied at an absolute pressure of 1.35 bar to 1.5 bar to the membrane separating device (2) and **in that** the permeate (9) is discharged from the membrane separating device (2) at an absolute pressure between 0.4 bar to less than 1.0 bar.

2. Method according to claim 1, **characterised in that** the pressure difference between the gas flow and the retentate (8) does not exceed 1 bar, preferably 0.2 bar to 0.5 bar, and/or **in that** the pressure difference is adjusted as a function of the concentration of the component to be enriched in the permeate (9).

3. Method according to one of the preceding claims 1 or 2, **characterised in that** the volume flow of the permeate (9) and/or the concentration of the enriched gas component is controlled by lowering the pressure level on the permeate side (11).

4. Method according to one of the preceding claims, **characterised in that** the permeate (9) is enriched to an oxygen concentration of 30% by volume.

5. Method according to one of the preceding claims, **characterised in that** the method is implemented in one step.

6. Method according to one of the preceding claims, **characterised in that** the gas flow is divided into at least two partial flows and is separated by a plurality of membrane separating units (10) and/or membrane separating devices (2) of a membrane separating arrangement (1) which are disposed in parallel.

7. Method according to one of the preceding claims, **characterised in that** at least one pocket module and/or plate module and/or hollow fibre module is used as membrane separating unit (10).

8. Method according to one of the preceding claims, **characterised in that** separation of disruptive components, in particular of particles and/or oils and/or fats, from the gas flow is provided before entry into the membrane separating device (2), preferably before compression.

9. Method according to one of the preceding claims, **characterised in that** the gas flow is heated or cooled before entry into the membrane separating device (2), preferably after compression, preferably by 10°C to 25°C.

10. Method according to one of the preceding claims, **characterised in that** condensable components, in particular water, are separated from the gas flow before entry into the membrane separating device (2).

11. Method according to one of the preceding claims, **characterised in that** separation of the gas flow is effected in the membrane separating device (2) at ambient temperature.

12. Method according to one of the preceding claims, **characterised in that** compression of the gas flow before entry into the membrane separating device (2) and/or lowering of the pressure level of the retentate (8) and/or of the permeate (9) is effected in one step and **in that**, preferably, compression is effected variably in an adjustable manner at a prescribed pressure level.

## Revendications

1. Procédé de séparation par membrane pour enrichir de l'air (7) en oxygène, selon lequel l'air pour l'enrichissement en oxygène est amené au moins à une unité de séparation par membrane (10), comportant au moins une membrane, d'un système de séparation par membrane (2), avec sur la membrane une séparation de l'air produite par perméation des gaz, en un rétentat (8) évacué d'un côté rétentat (12) de la membrane et en un perméat (9) évacué d'un côté perméat (11) de la membrane, le composant gazeux à enrichir traverse la membrane par perméation par un mécanisme de diffusion en solution, l'air est comprimé avant son entrée dans le système de séparation par membrane (2) à une pression d'entrée supérieure à la pression environnante, et le niveau de pression du côté perméat (11) est abaissé par rapport à la pression d'entrée du flux de gaz, le perméat (9) est enrichi à une concentration d'oxygène de 22 à 45 % en volume,
**caractérisé en ce que**
le flux de gaz est amené au système de séparation par membrane (2) à une pression absolue de 1,35 bar à 1,5 bar, et le perméat (9) est évacué du système de séparation par membrane (2) à une pression absolue de 1,4 bar à moins de 0,1 bar.

2. Procédé selon la revendication 1,
**caractérisé en ce que**
la pression différentielle entre le flux de gaz et le rétentat (8) ne dépasse pas 1 bar, de préférence 0,2 bar à 0,5 bar, et/ou la pression différentielle est réglée en fonction de la concentration du composant à enrichir dans le perméat (9).

3. Procédé selon l'une des revendications précédentes 1 ou 2,
**caractérisé en ce que**
le débit volumétrique du perméat (9) et/ou la concentration du composant gazeux à enrichir sont réglés par l'abaissement du niveau de pression du côté perméat (11).

4. Procédé selon l'une des revendications précédentes,
**caractérisé en ce que**
le perméat (9) est enrichi à une concentration en oxygène de 30 % en volume.

5. Procédé selon l'une des revendications précédentes,
**caractérisé en ce que**
le procédé est réalisé en une seule étape.

6. Procédé selon l'une des revendications précédentes,
**caractérisé en ce que**
le flux de gaz se divise en au moins deux flux partiels et est séparé par une pluralité d'unités de séparation par membrane (10) et/ou de systèmes de séparation par membrane (2), disposés en parallèle, d'un dispositif de séparation par membrane (1).

7. Procédé selon l'une des revendications précédentes,
**caractérisé en ce qu'**
on utilise comme unité de séparation par membrane (10) au moins un module à poches et/ou un module à plaques et/ou un module en fibres creuses.

8. Procédé selon l'une des revendications précédentes,
**caractérisé en ce qu'**
il est prévu de séparer du flux de gaz, avant l'entrée dans le système de séparation par membrane (2), de préférence avant la compression, les composants gênants, en particulier les particules et/ou les huiles et/ou les graisses.

9. Procédé selon l'une des revendications précédentes,
**caractérisé en ce que**
le flux de gaz est chauffé ou refroidi avant l'entrée dans le système de séparation par membrane (2), de préférence après la compression, de préférence de 10°C à 25°C.

10. Procédé selon l'une des revendications précédentes,
**caractérisé en ce que**
les composants condensables, en particulier l'eau, sont séparés du flux de gaz avant l'entrée dans le système de séparation par membrane (2).

11. Procédé selon l'une des revendications précédentes,
**caractérisé en ce que**
la séparation du flux de gaz dans le système de séparation par membrane (2) se produit à la température ambiante.

12. Procédé selon l'une des revendications précédentes,
**caractérisé en ce que**
la compression du flux de gaz avant entrée dans le système de séparation par membrane (2) et/ou l'abaissement du niveau de pression du rétentat (8) et/ou du perméat (9) se produisent en une seule étape et que, de préférence, la compression s'effectue de façon variable, réglable à un niveau de pression prédéterminé.
